# EUROPEAN PATENT SPECIFICATION

(11) **EP 2 814 696 B1**
(45) Date of publication and mention of the grant of the patent: **07.12.2016**
(21) Application number: 13715742.6
(22) Date of filing: 13.02.2013
(51) Int. Cl.: B60R 9/06, B60R 9/10

(54) **CARRIER DEVICE FOR ATTACHMENT TO A TOWING HOOK**
LASTENTRÄGER FÜR EINER ANHÄNGERKUPPLUNG
PORTE-CHARGE POUR ÊTRE ATTACHER SUR UN DISPOSITIF D'ATTELAGE

(30) Priority: 13.02.2012 BE 201200086
(43) Date of publication of application: 24.12.2014
(73) Proprietor: Yakima Australia Pty Ltd., Brendale, QLD 4520 (AU)
(72) Inventor: LEIJNEN, Peter, B-9800 Bachte-Maria-Leerne (BE)
(74) Representative: Ostyn, Frans
(86) International application number: PCT/IB2013/000188
(87) International publication number: WO 2013/121271

(56) References cited:
- EP-A2- 0 665 135
- EP-A2- 1 170 178
- DE-U1-202006 004 531
- DE-U1-202006 018 365
- DE-U1-202011 051 091

## Description

The present invention relates to a carrier device for releasable attachment to a towing hook of a vehicle, comprising a carrier structure for carrying a load to be transported, a clamping mechanism connected to the carrier structure, comprising a base part connected to a first and a second clamping part which can be brought into a clamping position and into a non-clamping position with respect to a towing hook located in the space between the clamping parts, and operating means for bringing the clamping parts from the non-clamping position into the clamping position, and vice versa.

In particular, the present invention relates to a carrier device, the carrier structure of which is designed to transport one or more bicycles.

EP 0 665 135 A2 describes a carrier device for bicycles, having a clamping mechanism consisting of two clamping pieces which are rotatable about a common hinge pin and can be placed in an open and a closed position in the manner of tongs. The clamping pieces are pushed away from one another into the open position by means of a spring. By moving the hinge pin upwards into a guide slot, the clamping pieces are pushed against a respective stop and rotated towards one another into the closed position in which they clamp a towing hook. One of the two stops is displaceable.
The clamping force with which the clamping means clamp the towing hook is determined by the distance between the two stops. In the case of such a clamping mechanism, it is not possible to guarantee that the clamping force will always be sufficient to attach the bicycle carrier to the towing hook in a stable and safe manner. The mechanism also does not permit the development of a very large clamping force. The clamping force will also greatly differ depending on the diameter of the towing hook ball.

DE 20 2011 051 091 U1 describes a bicycle carrier having a clamping device consisting of a housing with parallel walls in which guide slots are provided and two clamping elements which are displaceable in said slots and between which the ball of a towing hook can be clamped. The first clamping element can be displaced in the direction of the second clamping element by means of a lever arm which is rotatably connected to the housing. The movement of the lever arm is transmitted to said first clamping element via a connecting piece. The second clamping element can be displaced in order to change the size of the clamping space between the clamping elements. The clamping force is in this case dependent on the size of the clamping space which is set. It is also not possible with this device to guarantee that the clamping force will always be sufficient to attach the bicycle carrier to the towing hook in a stable and safe manner.

Patent publication EP 1293386 A1 relates to a carrier device having a clamping mechanism which comprises two flank pieces connected to a first and a second clamping member between which a towing hook can be clamped. The first clamping member is displaceable with respect to the flank pieces by means of a lever which forms part of a folding carrier structure, and the second clamping member is fixedly attached to said flank pieces. A resilient element is accommodated between the displaceable first clamping member and the component on which a force is exerted by means of the lever. Patent publication EP 1799512 B1 describes a similar carrier device. In this case, the first clamping member can be displaced with respect to the coupling housing by means of a camshaft connected to a lever, whereas the second clamping member is fixedly attached to said coupling housing. In this case, too, the lever is connected to the folding carrier structure and a resilient element is provided between the first clamping member and the component on which a force is exerted by the camshaft.

In the carrier devices described in the previous paragraph, the efficiency of the clamping force and the force distribution can be improved upon.

It is an object of the present invention to provide a user-friendly carrier device having a simple structure, and having a clamping mechanism which does not possess the abovementioned drawbacks of the known carrier devices and by means of which it is therefore always possible to develop an efficient and sufficiently high clamping force with a good distribution of forces with respect to the towing hook.

This object is achieved by providing a carrier device having the features indicated in the first paragraph of this description, wherein said carrier device, according to the present invention, comprises transmission means for bringing the clamping parts into the clamping position by exerting a force which pushes the first clamping part and the base part away from one another, while the second clamping part is connected via a spring element to the base part, so that, as the clamping parts are brought into the clamping position under the influence of said force, the base part is displaceable counter to a spring force with respect to the first and the second clamping part and the towing hook located therebetween.

Since the tensioning of the clamping device results in a force which pushes the first clamping part towards the second clamping part and also causes the base part to be displaced with respect to the two clamping parts, said displacement being counteracted by a spring force, this results in very efficient clamping with a sufficiently high clamping force and a good distribution of forces with respect to the towing hook.

In a preferred embodiment of the carrier device according to the present invention, said transmission means comprise a pushing element which is displaced according to a well-defined movement trajectory by rotation of an operating arm and which moves during this displacement over a running surface provided on the first clamping part, so that the pushing element exerts an increasing force on the first clamping part during rotation of the operating arm in one direction of rotation and exerts a decreasing force on the first clamping part during rotation of the operating arm in the other direction of rotation.

As a result, the movement of the operating arm is transmitted directly to the first clamping part by simple transmission means. Such a transmission also allows a relatively low force on the operating arm to be converted into a sufficiently high force on the first clamping part.

The movement trajectory and the profile of the running surface can be matched to one another in such a way that the force on the first clamping part increases and decreases very gradually during the rotation of the operating arm. All of this contributes to the simplicity, the efficiency and the user-friendliness of the clamping mechanism of the present carrier device.

In an even more user-friendly embodiment, the carrier device is designed to have a tiltable carrier structure which is connected to said operating arm, so that the clamping means are brought from the clamping position into the non-clamping position, and vice versa, by tilting the carrier structure. This allows the clamping mechanism to be operated during positioning of the carrier structure.

The carrier structure is therefore preferably tiltable between an operative position and an inoperative position and the clamping mechanism is designed such that the clamping means are in the non-clamping position when the carrier structure is in the inoperative position, and such that the clamping means are in the clamping position when the carrier structure is in the operative position.

In a particularly advantageous embodiment, the carrier structure is tiltable between an operative position and an inoperative position and the base part comprises a support surface for supporting said operating arm when the carrier structure is in the operative position. As a result, the weight of the carrier device and of the carrier structure, together with the weight of the load which is being carried, is largely borne by the base part. This prevents said weight from overloading the clamping parts.

In a very preferred embodiment, the operating arm is rotatably connected to the base part of the clamping mechanism, and the pushing element is attached to the operating arm, so that the pushing element is displaced according to a substantially circular-arc-shaped movement trajectory during the rotation of the operating arm. This results in a mechanism which has a minimal number of components and which permits the development, in a user-friendly manner, of a sufficiently large force which pushes the first clamping part and the base part away from one another. The clamping mechanism becomes even simpler if said running surface is formed by a surface of the first clamping part.

In order to keep wear to a minimum, it is possible to provide the pushing element with a rotatably attached roller body, with the roller body rolling over the running surface of the first clamping part during the movement of the pushing element.

The clamping mechanism also preferably comprises locking means for detaining the carrier structure in the operative position and in the inoperative position.

In a preferred embodiment, the operating arm is rotatably connected to the base part by means of a fixed axle, with said fixed axle extending through a cut-out in the first clamping part, said cut-out permitting a displacement of the first clamping part with respect to the fixed axle, so that the first clamping part is rotatable about the fixed axle and is also displaceable with respect to the base part. In this way, the first clamping part is displaceably and rotatably connected to the base part in a very simple manner without additional components.

In a more preferred embodiment, the clamping mechanism comprises an axle which is displaceable with respect to the base part, and the second clamping part is rotatably attached to the base part by means of said displaceable axle, so that the second clamping part is rotatable and is also displaceable with respect to the base part. In this way, the second clamping part is also displaceably and rotatably connected to the base part in a very simple manner.

The spring element is preferably connected at one side to the displaceable axle of the second clamping element and is connected at the other side to the base part of the clamping mechanism. The connection of the spring element to the base part can be realized by connecting the spring element to the fixed axle of the operating arm.

In a very particular embodiment, the spring element is curved and is substantially made from an elastically deformable material, preferably metal. Great preference is given here to the use of a spring element made from spring steel.

It is possible to design the base part, for example, such that it comprises two flank plates which extend next to one another at a distance, wherein the clamping parts are attached to respective axles which extend between the flank plates. In this case, the clamping mechanism can comprise two spring elements which extend along the outside of a respective flank plate, with each spring element being connected at one side to the second clamping part and at the other side to the base part.

An additional feature of the present invention is the design of the first and the second clamping parts. Preferably, at least one of said clamping parts is designed in such a way that it comprises a first substantially spherical concave clamping surface for surrounding part of a head of a towing hook, and a second substantially cylindrical concave clamping surface for surrounding part of a neck of the towing hook which adjoins the head.

In a very advantageous embodiment, both clamping parts are designed such that they comprise the abovementioned first and second clamping surfaces, so that the first and second clamping surfaces of the clamping parts, with respect to a towing hook located therebetween, fit against opposite sides of respectively the head and the neck of the towing hook and thereby hold the carrier device on the towing hook in a stable manner in both the clamping position and the non-clamping position. In contrast with the known carrier devices, it is therefore no longer necessary to hold the carrier device during the interval between placing said carrier device on the towing hook and bringing the clamping means into the clamping position.

Another drawback of the above-described clamping mechanisms according to EP 1 293 386 A1 and EP 1 799 512 B1 is that they have to be brought into a tilted position in order to be able to place the clamping mechanism onto the ball of a towing hook in a position in which the clamping parts are in the non-clamping position at the front and the rear, respectively, of the towing hook ball. Such an action is not very user-friendly and, from an ergonomic perspective, also results in harmful straining of the back of the person who has to perform this action.

An additional drawback is that, in the abovementioned non-clamping position, said carrier devices rest on the towing hook in an unstable manner. This results in the need to hold or support the carrier structure until the clamping means have been brought into the clamping position. Another consequence of this is that said known carrier devices must be placed on the towing hook in the clamping position, even if they are not bearing a load. The carrier structure connected to the lever must therefore always be in its folded-down position, and in the case of a parked car, for example, this will constitute an inconvenient obstacle to pedestrians or passing traffic.

It is an additional aim of the present invention to provide a more user-friendly carrier device having a simple structure which does not possess the above-described drawbacks.

This aim is achieved by providing a carrier device in which, according to the present invention, the first clamping part and at least a part of the second clamping part are rotatable or displaceable with respect to said base part, so that the width of a passage between the non-clamping clamping parts can be changed, and in particular as a result of the first clamping part and at least a part of the second clamping part being rotatable or displaceable in the non-clamping position,
- into a respective first position in which the head of a towing hook can be brought into the space via the passage, and
- into a respective second position in which both clamping parts fit against opposite sides of the head and/or the neck of the towing hook, and thereby hold the carrier device on the towing hook in a stable manner.

It is thereby possible to form a passage between the clamping parts which allows the clamping mechanism to be lowered vertically downwards from a position above the towing hook until the ball of the towing hook is inside the space between said clamping parts. When the ball is between the clamping parts, the second clamping part, or at least a part thereof which is at the rear of the ball (i.e. at the side facing the front of the car), can assume a position in which a support surface of said clamping part has a good fit against the rear of the ball surface when the clamping parts are brought into the non-clamping position.

It is possible to place such a carrier device onto a towing hook in one vertical downwards movement, which places far less strain on the back in comparison with the existing carrier devices. Moreover, the carrier device is then immediately stable on the towing hook, so that it no longer has to be supported or held until the clamping means have been brought into the clamping position. As a result, the operator has both hands free to subsequently bring the clamping parts into the clamping position. If the carrier structure can be folded up and is connected to the operating mechanism, it is possible to leave the carrier structure in the folded-up position with non-clamping clamping parts and even to lock it in this position.

Furthermore, the second clamping part is preferably formed in such a way that it comprises a support surface which substantially fits against the lower half of the ball and/or against the neck of the towing hook, in each case at the rear thereof. The force exerted by the carrier device at the location of this support surface on the underside of the ball then has a far greater upwardly directed component than in existing carrier devices, as a result of which the carrier device cannot tilt on the towing hook under the influence of its own weight, but rather remains on the towing hook in a stable manner.

In another preferred embodiment, the passage is provided at the underside of the carrier device and the clamping parts can be placed into a position such that a passage is formed, through which the head can be brought into the space by means of a substantially vertical downwards displacement of the carrier device.

In a particular embodiment, at least one clamping part also comprises a clamping surface for fitting against part of a neck of the towing hook which adjoins the head.

During use, the clamping surface which fits against the neck will fit against the underside of the ball, so that an upwardly directed reaction force is also transmitted to the ball via said component.

In another embodiment, the second clamping part can be composed of two or more parts, wherein it comprises a part with a clamping surface for fitting against the lower part of the ball and/or the neck of the towing hook, and wherein said part of the second clamping part is rotatable or displaceable with respect to the base part. By displacing said part, the passage to the space between the clamping parts can be cleared in order to allow the towing hook ball to pass through in the vertical direction, and the displaced part can then move back in order to fit against the ball located between the clamping parts. As the second clamping part in this case also comprises a support surface which fits against the underside of the ball, this embodiment of the carrier device will also remain on the towing hook in a stable manner.

In a particularly preferred embodiment of said carrier device, the first clamping part and at least a part of the second clamping part are rotatable between a clamping position in which the clamping surface surrounds a towing hook and a downwardly rotated open position in which the clamping parts are remote from one another at the underside and leave a passage clear through which the spherical head of a towing hook can be brought into the space between the clamping parts.

Such a carrier device can be placed onto a towing hook by lowering it substantially vertically from a position in which the clamping means are above the towing hook until the head of the towing hook is inside the space between the clamping parts. When the carrier device is lowered further, the head of the towing hook will strike the upper side of each downwardly rotated clamping part, so that said clamping part automatically rotates into the clamping position.

By rotating the clamping parts downwards, a passage is formed at the underside having a wide inlet at the bottom which gradually narrows towards the top. Said passage is, for example, substantially funnel-shaped or V-shaped. As the carrier device is lowered, the ball moves into said passage which narrows towards the top, and as the carrier device is lowered further said ball is automatically brought into the correct position, with the ball situated centrally between the clamping parts. Said clamping parts therefore have a self-centring effect.

Preferably, for each rotatable clamping part a stop is provided to prevent the further upward rotation of the clamping part when the clamping part is in the clamping position, and/or a retaining means is provided for preventing the further downward rotation of the clamping part when the clamping part is in the open position. The stop ensures that the clamping parts remain in the clamping position in a stable manner. The retaining means prevents the rotatable clamping parts from rotating too far downwards, which would result in the rotatable clamping parts moving into a position in which they could not be rotated into the clamping position by the towing hook during the downwards movement of the carrier device from a position above the towing hook.

Preferably, the clamping mechanism also comprises resilient elements which force each rotatable clamping part into the open position. As a result, the rotatable clamping parts of the carrier device which is not placed on a towing hook are always in the open position and the carrier device is ready to be placed on a towing hook in a problem-free manner by lowering said carrier device substantially vertically from a position in which the open clamping means are above the towing hook, with the head of the towing hook coming to lie in the space between the clamping parts.

To prevent theft or undesired removal of the carrier device, the clamping mechanism can also be provided with a lock having an open and a closed position, wherein, in the closed position, the lock is designed to keep at least one rotatable clamping part in said clamping position.

In a most preferred embodiment of the carrier device according to the present invention, the carrier structure is designed to carry one or more bicycles. The carrier structure can thus be provided, for example, with one or more wheel trays and the required retaining means for holding each bicycle in a fixed position on the carrier structure.

The invention will now be explained in more detail on the basis of the following detailed description of a preferred embodiment of a bicycle carrier according to the present invention. The accurate description of this example is intended only to provide an illustration of the above-described basic features of the invention and to indicate further advantages and details of the invention. This description can therefore by no means be seen as a limitation of the scope of protection or of the area of application of the invention.

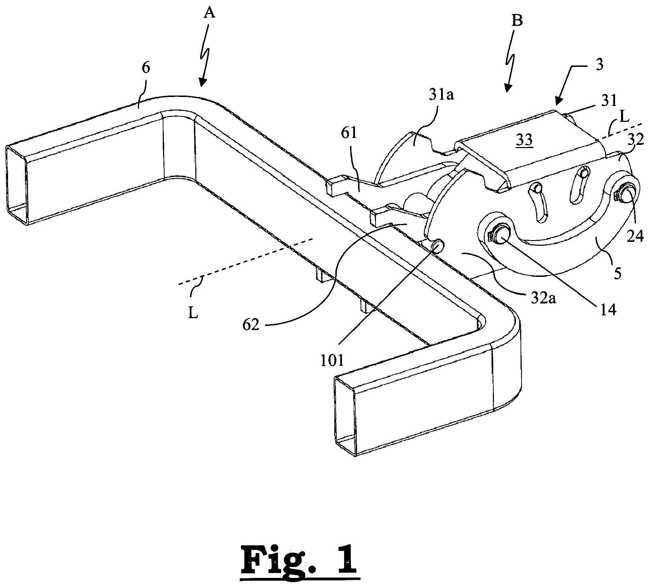

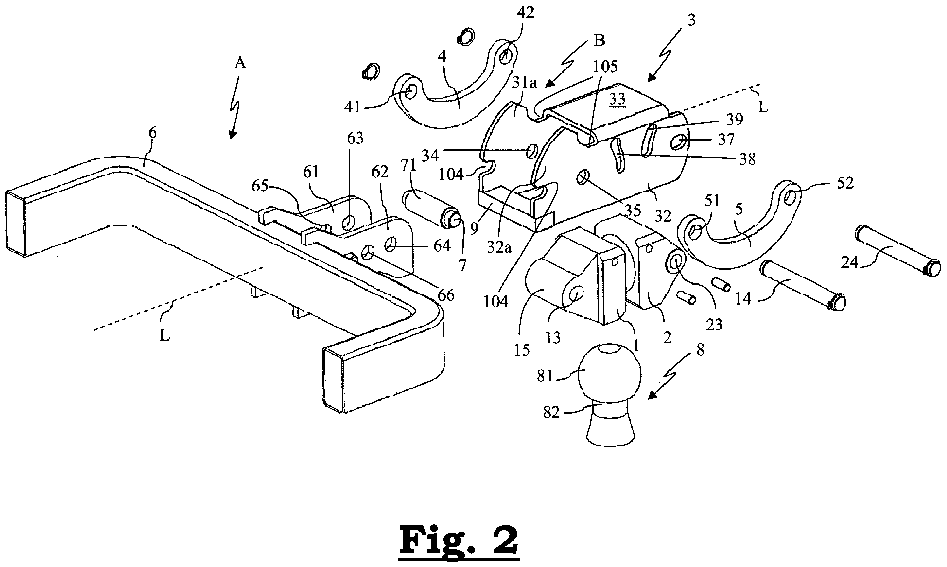

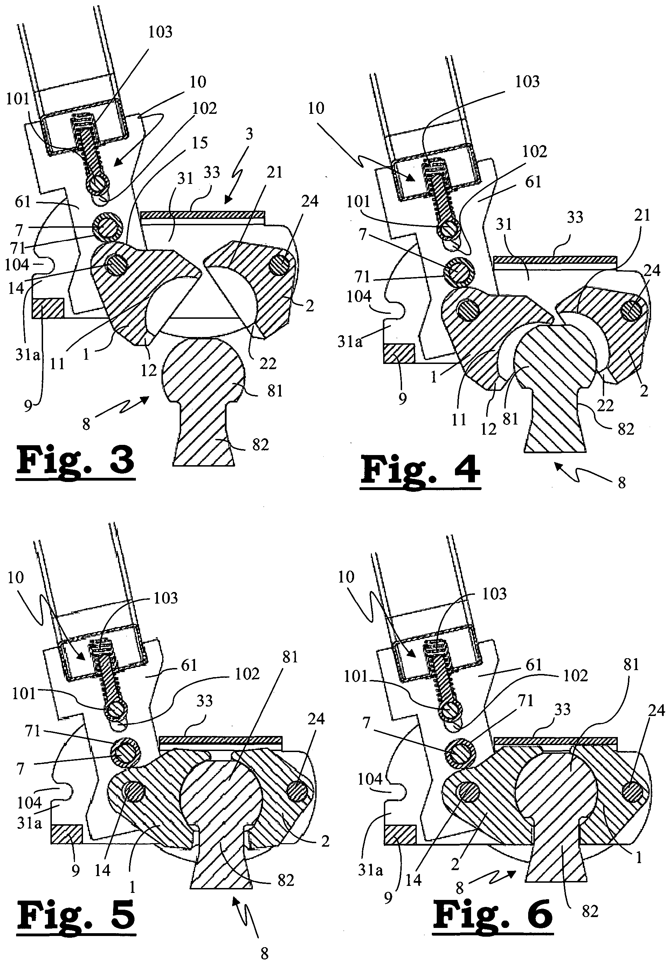

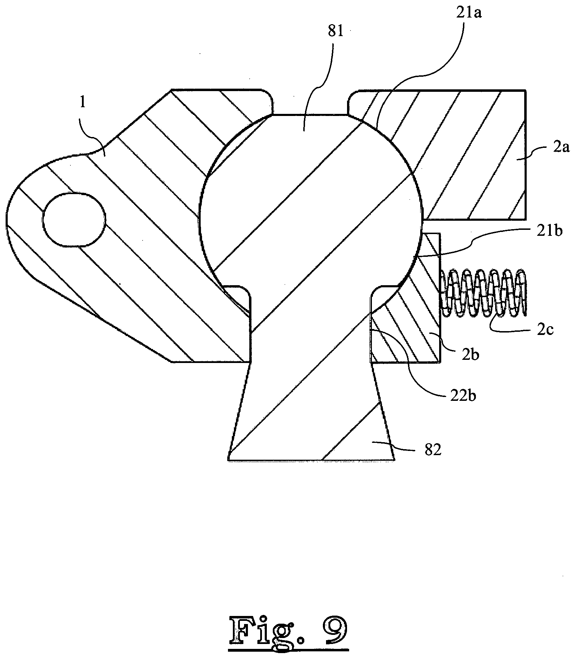

Reference numerals are used in this detailed description to refer to the attached figures, in which:
▪ Figure 1 shows a perspective view of a bicycle carrier with a partially illustrated carrier structure, with said carrier structure being in an operative position;
▪ Figure 2 shows the various separate components of the bicycle carrier from Figure 1;
▪ Figures 3 to 8 show the clamping mechanism of the bicycle carrier in cross section, respectively at six successive points in time during the attachment of the clamping mechanism to a towing hook; and
▪ Figure 9 shows a cross section of an alternative embodiment of the clamping parts of a bicycle carrier.

The carrier device according to the present invention may be embodied as a bicycle carrier which comprises a carrier structure (A) for one or more bicycles, connected to a clamping mechanism (B) by means of which the unit can be attached to a towing hook (8) in a stable manner. This carrier device is substantially made from aluminium, for example, or from an alloy of substantially light metals, such as for example an alloy of aluminium or zinc.

More particularly, the carrier structure (A) comprises (see Figures 1 and 2) a U-shaped supporting beam (6) on which at least two groove-shaped profiles (not shown in the figures), hereinafter referred to as wheel trays, are attached running next to one another. Only the supporting beam (6) of the carrier structure (A) is shown in the figures. In the operative position of the bicycle carrier, the U-shaped supporting beam (6) is in a substantially horizontal position (see Figure 1), and said wheel trays then extend substantially horizontally and parallel next to one another in the width direction of the vehicle. Each of these wheel trays is then provided to support a respective bicycle, with both wheels positioned in the wheel tray.

The carrier structure (A) also comprises the required means, for example a number of clamping or retaining means (not shown in the figures) connected to the carrier structure, for containing or otherwise retaining the wheels and/or the frame of the bicycles, in order to keep the bicycles in a fixed position on the carrier structure (A), so that they can be transported by the vehicle in a safe manner.

At the rear, behind the wheel trays, the carrier structure (A) also supports a light bar (not shown in the figures) which, in the operative position, extends horizontally in the width direction of the vehicle and which carries a set of rear lights, brake lights and reflectors at the rear. Furthermore, the bicycle carrier is also provided with the required electrical connection means for connecting these lights to the electrical circuit of the vehicle.

Said clamping mechanism (B) serves to attach the bicycle carrier to the towing hook (8) of a vehicle in a stable manner. The towing hook (8) consists of a spherical head (81) on a substantially cylindrical base, referred to below as the neck (82).

Said clamping mechanism (B) comprises a housing (3) which is symmetrical with respect to the longitudinal axis (L) of the load carrier. Said housing (3) comprises two flank plates (31), (32) at a distance from one another which extend in parallel planes along the longitudinal axis (L). The flank plates (31), (32) are connected to one another at the top over a part of their length by means of a rectangular horizontal cover plate (33), so that the front of the housing (3) has a substantially U-shaped profile with an open side directed downwards, and ends at the rear with the parts (31a), (32a) of the flank plates (31), (32) which extend past the cover plate (33).

Two fixed arms (61), (62) are provided on the U-shaped supporting beam (6) of the carrier structure (A) which extend parallel to one another and at a distance from one another along the longitudinal axis (L) of the carrier device.

Said arms (61), (62) are rotatably connected to the flank plates (31), (32) of the housing (3) by means of a fixed axle (14) which extends in the transverse direction, with said axle (14) also extending through a bore (13) in the first clamping part (1), as will be explained in more detail below.

The arms (61), (62) are provided with cylindrical bores (63), (64) opposite one another with axes extending in line with one another at right angles to the longitudinal direction (L), with corresponding cylindrical bores (34), (35) also being provided in the projecting parts (31a), (32a) of the flank plates (31), (32) for the axle (14). The axle (14) extends between the flank plates (31), (32) at right angles to the longitudinal direction (L), through the bores (63), (64) provided in the arms into the bores (34), (35) provided in the flank plates (31), (32). The axle (14) furthermore extends past the flank plates (31), (32) on both sides of the housing (3).

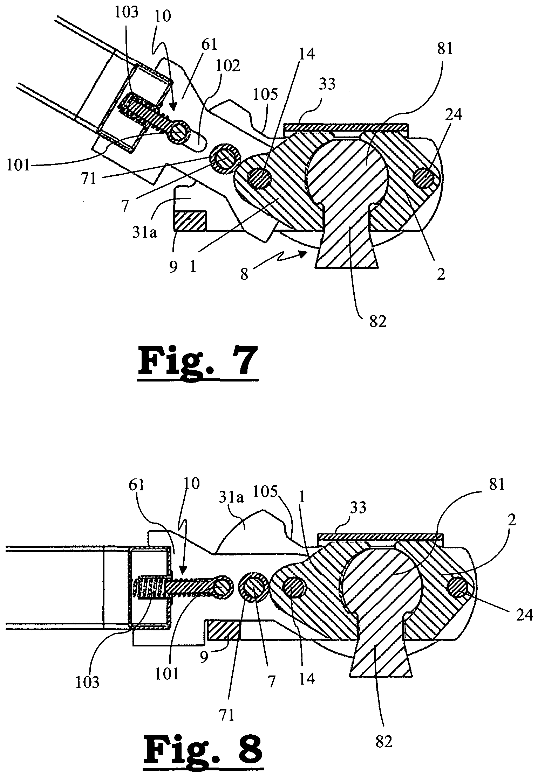

The arms (61), (62) are rotatable about the axle (14), so that the carrier structure (A) connected to these arms is tiltable between an inoperative position in which the carrier arm (6) is in an oblique upright position (see Figures 3 to 6), and an operative position in which the carrier arm (6) is in a horizontal position, as shown in Figures 1 and 8.

Between the axle (14) and the supporting beam (6), the arms (61), (62) also support a roller body (71) on an axle (7) which extends between said arms. For this purpose, two bores (65), (66) are provided opposite one another in the arms (61), (62), the axes of which extend perpendicularly to the longitudinal direction (L) of the bicycle carrier. These bores (65), (66) contain the end parts of the axle (7) extending between the arms (61), (62) at right angles to the longitudinal direction (L). The roller body (71) is a cylindrical body with a cavity extending along the longitudinal axis. The axle (7) extends through this cavity so that the roller body (71) can rotate about the axle (7).

The roller body (71) is in contact with the rear side of the first clamping part (1) which is directed towards the carrier structure (A). Said rear side has a curved surface which forms a running surface (15) for the roller body (71). The curved profile of said running surface (15) is configured in such a way that the movement of the roller body (71) over the running surface (15), according to the circular-arc-shaped movement trajectory defined by the arms (61), (62), results in the first clamping part (1) being displaced with respect to the housing (3).

The clamping mechanism (B) comprises a first (1) and a second clamping part (2) between which the towing hook (8) can be clamped. Both clamping parts (1), (2) are rotatably connected to the housing (3) in the space between the flank parts (31), (32) and have identical concave clamping surfaces, the shape of which complements a side of the spherical head (81) and the upper part of the neck (82) of the towing hook (8), so that the two clamping parts (1), (2), with their respective clamping surface fitting against either side of the head (81) and the neck (82), can enclose the towing hook (8).

More particularly, each clamping surface for this purpose consists of a first concave spherical clamping surface (11), (21) which complements the shape of the spherical head (81) and which merges at the bottom into a second concave cylindrical clamping surface (12), (22) which complements the shape of the upper part of the neck (82) of the towing hook (8).

The first clamping part (1) is rotatably connected to the flank plates (31), (32) in the space between said flank plates, by virtue of the fact that the axle (14) also extends through a transverse bore (13) in the first clamping part (1). Said bore (13) has a non-cylindrical elongate profile and permits the first clamping part (1) to be displaced over a limited distance (for example 2 to 4 mm) in the longitudinal direction (L) with respect to the flank parts (31), (32).

The second clamping part (2) is rotatably connected to the flank plates (31), (32) in the space between said flank plates, by virtue of the fact that an axle (24) running in a transverse direction extends through a cylindrical bore (23) in the second clamping part (2), with the end parts of said axle (24) being held in respective bores (37) of the two flank parts (31), (32). Said bores (37) have a non-cylindrical elongate profile and permit the axle (24) to be displaced over a limited distance (for example 2 to 4 mm) in the longitudinal direction (L) with respect to the flank parts (31), (32).

Finally, the clamping mechanism (B) also comprises two arc-shaped spring elements (4), (5) made from spring steel. Each of these spring elements (4), (5) is provided with a respective opening (41), (42); (51), (52) near both ends. The spring elements (4), (5), which each run along the outside of the flank plate (31), (32) on one side of the housing (3), are connected at one end to the fixed axle (14) of the first clamping part (1), and at the other end to the displaceable axle (24) of the second clamping part (2). More particularly, the two end parts of the displaceable axle (24), which each extend beyond the flank plates (31), (32) on one side, are held in the openings (42), (52) at one end of the respective spring elements (4), (5), while the two end parts of the fixed axle (14), which likewise each extend beyond the flank plates (31), (32) on one side, are held in the openings (41), (51) at the other end of the respective spring elements (4), (5).

In order to attach the bicycle carrier to a towing hook (8), it is lowered from a position in which the clamping parts (1), (2) are above the towing hook (8) (see Figure 3). The two clamping parts (1), (2) are rotatable about their respective axles (14), (24) and are brought, by means of spring elements (not illustrated in the figures), into a downwardly rotated open position in which they delimit a V-shaped space which broadens towards the bottom. In this position, the sides of the planes facing one another (in which the clamping surfaces are provided) form approximately a right angle, as can clearly be seen in Figure 3. As the bicycle carrier is lowered, the spherical head (81) comes to lie between the open clamping parts (1), (2). At a certain point in time (see Figure 4), the head (81) will then strike the upper side of the spherical portion of the clamping parts and, as the bicycle carrier is lowered further, the clamping parts (1), (2) are thereby rotated upwards (see Figure 5) until they reach the clamping position (see Figure 6).

Further rotation is rendered impossible by virtue of the fact that, in the clamping position, the clamping parts (1), (2) abut the underside of the cover plate (33) of the housing (3). In other words, the underside of the cover plate (33) in this case functions as a stop which prevents further upward rotation of the rotatable clamping parts (1), (2).

Two arc-shaped cut-outs (38), (39) are provided in one of the flank plates (32) of the housing (3) (see Figures 1 and 2). One cut-out (38) defines a guide track for a projection which is provided on the first clamping part (1). The other cut-out (39) defines a guide track for a projection which is provided on the second clamping part (2). Said projections are situated in the respective cut-outs (38), (39) and cannot leave said cut-outs (38), (39), so that they limit the rotation of the clamping parts (1), (2) both in the upward and in the downward direction. This prevents the clamping parts (1), (2) from being able to rotate further upwards past the clamping position and further downwards past the open position.

In the clamping position, the spherical clamping surfaces (11), (21) of the clamping parts (1), (2) fit against the opposite sides of the spherical head (81), while the cylindrical clamping surfaces (12), (22) of the clamping parts (1), (2) also fit against the upper part of the neck (82) of the towing hook (8). This ensures that the bicycle carrier is already stable on the towing hook (8) in this situation, and no longer needs to be held, even though the clamping parts have not yet been placed in the clamping position.

In a subsequent step, the carrier structure (A) connected to the arms (61), (62) is tilted downwards from the inoperative state. In this case, the arms (61), (62) rotate downwards (counterclockwise in the figures) about the fixed axle (14), and the roller body (71) provided on the axle (7) runs over the running surface (15) indicated in Figures 2 and 3 which is formed by the rear side (the side facing the carrier structure (A)) of the first clamping part (1).

By rotating the arms (61), (62), the roller body (71) moves along a circular-arc-shaped movement trajectory with the fixed axle (14) as the centre point. The running surface (15) remains in contact with the roller body (71) during this movement, but has a profile such that the roller body (71) exerts a gradually increasing force (directed towards the second clamping part (2)) on the running surface (15). The first clamping part (1) will transmit the gradually increasing force to the second clamping part (2) via the towing hook (8).

Both the first (1) and the second clamping parts (2) are displaceable with respect to the housing (3). The vehicle will of course remain in a stationary position while the increasing force is being exerted, and since the towing hook (8) is connected to the vehicle and the clamping parts (1), (2) fit against the towing hook (8) of the vehicle, the clamping parts and the towing hook (8) will also not be moved. The gradually increasing force will therefore result in a displacement of the housing (3) (in the direction of the carrier structure (A)) with respect to the towing hook (8).

The arc-shaped spring elements (4), (5) are connected at one end (41), (51) to the fixed axle (14) which is secured to the housing (3) and are connected at the other end (42), (52) to the displaceable axle (24) of the second clamping element (2), so that said other end (42), (52) is secured to the clamping parts (1), (2) and the towing hook (8) located therebetween. When the housing (3) is then displaced with respect to the clamping parts (1), (2) in the direction of the carrier structure (A), said displacement is counteracted by the spring elements (4), (5). The spring elements (4), (5) thereby exert a clamping spring force which pushes the first clamping part (1) and the second clamping part (2) towards one another with great force, as a result of which both clamping parts (1), (2) therefore exert a great clamping force on the towing hook (8).

A lock (not illustrated in the drawings) can be provided in the upper cover plate (33) of the housing (3), by means of which at least one of the rotatable clamping parts (1), (2) can be retained in the clamping position with respect to the housing (3). For this purpose, the lock comprises two interacting lock parts, for example, the first lock part being connected to the cover plate (33) and the second lock part being connected to the first clamping part (1). The lock can be opened and closed from the top of the housing using a key and is designed to immobilize both lock parts with respect to one another when the lock is closed. As a result, the first clamping part (1) is held in the clamping position and the clamping part (1) cannot be rotated downwards into the open state. The second clamping part (2) which encloses the towing hook (8) together with the first clamping part (1) is also held in the clamping position by this means.

When the carrier structure is tilted downwards into the operative position, the carrier device is fixedly attached to the towing hook (8) and is ready for the safe transport of one or more bicycles. It is sufficient to place these bicycles on the carrier structure (A) and to attach them to said carrier structure using the retaining means provided. The carrier structure can of course also be provided for transporting some other type of load, such as for example luggage, either separately or together with one or more bicycles.

In the operative position of the carrier structure, the arms (61), (62) extend in the horizontal direction towards the rear and rest on a bar-shaped support element (9) which is connected to the housing (3) and extends between the rearwardly projecting parts (31a), (32a) of the flank plates. As a result, the downwardly directed force of the load carried by the carrier structure (A) is transmitted to the housing (3).

At least one of the arms (61), (62) can also have a shape or a projecting part such that, when the arms (61), (62) are in the horizontal position (the operative position), they prevent one of the clamping parts (1), (2) from rotating out of the clamping position into the open position. This provides an additional guarantee that the clamping parts (1), (2) which have been placed in the clamping position will always remain in the clamping position.

Furthermore, there is also a locking mechanism (10) provided on the arms (61), (62) in the form of a locking bar (101) extending between the arms and perpendicularly to the longitudinal direction (L), said locking bar (101) being displaceable in an elongate cut-out (102) in the arms (61), (62) and being pushed by a helical spring (103) in the direction of the axle (14). The locking mechanism (10) is only shown in Figures 3 to 8. The locking bar (101) can be moved away from the axle (14) counter to the spring force of the helical spring (103) by means of operating means (not illustrated), such as for example a handle provided on the arms (61), (62).

The projecting parts (31a), (32a) of the flank plates (31), (32) are provided with a semi-circular cut-out (104) at the edge, so that the locking bar (101) can be placed into said cut-out (104) when the arms (61), (62) are in the horizontal position (see Figure 1). The locking bar (101) is then held in said cut-out (104) under the influence of the helical spring (103), which prevents the arms (61), (62) from undesirably leaving the horizontal position. This guarantees that the carrier structure (A) remains in the operative position at all times and does not jerk upwards, for example, when the vehicle drives over bumps.

The edge of the projecting parts (31a), (32a) also has a stepped recess (105) at the top, so that the locking bar (101) can also be placed in a fixed position at that location in order to hold the carrier structure (A) in the upwardly tilted inoperative position.

In order to change the position of the carrier structure (A), the locking bar (101) must be pulled from the cut-out (104) or recess (105), counter to the spring force, by means of operating means, following which the arms (61), (62) can rotate freely about the fixed axle (14).

In an alternative embodiment, the clamping mechanism (shown schematically in cross section in Figure 9) is provided with a first clamping part (1) which is rotatably connected to the housing (3), as is the case in the embodiment described above, and a second clamping part (2a, 2b) consisting of two parts (2a), (2b), the upper part (2a) of which is fixedly attached to the housing (3) or another fixed component of the carrier device, and the lower part (2b) of which is displaceable counter to a spring force of a resilient element (2c). The resilient element (2c) is schematically illustrated as a helical spring, but it is obvious that said element can also have a different form and in principle can be replaced by any elastically deformable element or member.

The upper part (2a) of the second clamping part (2) has a spherical concave clamping surface (21 a) for fitting against the upper side of the towing hook ball (81), and the lower part (2b) has a likewise spherical concave clamping surface (21b) for fitting against the underside of the towing hook ball (81), as well as a cylindrical concave clamping surface (22b) for fitting against the neck (82) of the towing hook (8). Both parts (2a), (2b) of the second clamping part are designed such that they fit one above the other against the rear side (the side facing the front of the car) of the ball (81).

By virtue of the fact that the lower part (2b) can be moved away from the ball (81), the passage between the clamping parts (1), (2a, 2b) can be enlarged at the bottom, so that there is enough space at the underside to bring the clamping parts (1), (2a), (2b) by means of a vertical downwards displacement into a position in which the towing hook ball (81) is situated between the clamping parts. The displaced lower part can then return, under the influence of the spring force acting on it, to a position in which it fits against the towing hook ball (81) with the spherical concave clamping surface (21b) and fits against the neck (82) with the cylindrical concave clamping surface (22b), while the clamping parts have not yet been brought into the clamping position (as illustrated in Figure 9).

In this embodiment, too, the advantage that the carrier device can be placed onto a towing hook (8) by means of a vertical downwards movement is combined with the advantage that the carrier device is already stable on the towing hook (8) in the non-clamping position of the clamping parts (1), (2a, 2b).

## Claims

1. Carrier device for releasable attachment to a towing hook (8) of a vehicle, comprising
a. a carrier structure (A) for carrying a load to be transported,
b. a clamping mechanism (B) connected to the carrier structure, comprising a base part (3) connected to a first (1) and a second clamping part (2) which can be brought into a clamping position and into a non-clamping position with respect to a towing hook (8) located in the space between the clamping parts (1), (2), and
c. operating means for bringing the clamping parts (1), (2) from the non-clamping position into the clamping position, and vice versa,
**characterized in that** said carrier device comprises transmission means for bringing the clamping parts (1), (2) into the clamping position by exerting a force which pushes the first clamping part (1) and the base part (3) away from one another, **in that** the second clamping part (2) is connected via a spring element (4), (5) to the base part (3), so that, as the clamping parts (1), (2) are brought into the clamping position under the influence of said force, the base part (3) is displaceable counter to a spring force with respect to the first (1) and the second clamping part (2) and the towing hook (8) located therebetween.

2. Carrier device according to claim 1, **characterized in that** said transmission means comprise a pushing element (7) which is displaced according to a well-defined movement trajectory by rotation of an operating arm (61, 62) and which moves during this displacement over a running surface (15) provided on the first clamping part (1), so that the pushing element (7) exerts an increasing force on the first clamping part (1) during rotation of the operating arm (61, 62) in one direction of rotation and exerts a decreasing force on the first clamping part (1) during rotation of the operating arm (61, 62) in the other direction of rotation.

3. Carrier device according to claim 2, **characterized in that** the carrier structure (A) is tiltable between an operative position and an inoperative position and is connected to said operating arm (61, 62), so that the clamping parts (1), (2) are brought from the clamping position into the non-clamping position, and vice versa, by tilting the carrier structure (A), and **in that** the base part (3) comprises a support surface (9) for supporting said operating arm (61, 62) when the carrier structure is in the operative position.

4. Carrier device according to claim 2 or 3, **characterized in that** said running surface (15) is formed by a surface of the first clamping part (1), **in that** the operating arm (61), (62) is rotatably connected to the base part (3) of the clamping mechanism (B), and **in that** the pushing element (7) is attached to the operating arm (61), (62), so that the pushing element (7) is displaced according to a substantially circular-arc-shaped movement trajectory during the rotation of the operating arm.

5. Carrier device according to any one of claims 2 to 4, **characterized in that** the operating arm (61, 62) is rotatably connected to the base part (3) by means of a fixed axle (14), **in that** said fixed axle (14) extends through a cut-out (13) in the first clamping part (1) which permits a displacement of the first clamping part (1) with respect to the fixed axle (14), so that the first clamping part (1) is rotatable about the fixed axle (14) and is also displaceable with respect to the base part (3).

6. Carrier device according to any one of the preceding claims, **characterized in that** the clamping mechanism (B) comprises an axle (24) which is displaceable with respect to the base part (3), and **in that** the second clamping part (2) is rotatably attached to the base part (3) by means of said displaceable axle (24), so that the second clamping part (2) is rotatable and is also displaceable with respect to the base part (3).

7. Carrier device according to claim 6, **characterized in that** the spring element (4), (5) is connected at one side to the displaceable axle (24) of the second clamping element (2) and is connected at the other side to the base part (3) of the clamping mechanism (B).

8. Carrier device according to any one of the preceding claims, **characterized in that** the base part (3) comprises two flank plates (31), (32) which extend next to one another at a distance, **in that** the clamping parts (1), (2) are attached to respective axles (14), (24) which extend between the flank plates (31), (32), **in that** the clamping mechanism (B) comprises two spring elements (4), (5) which extend along the outside of a respective flank plate (31), (32), and **in that** each spring element (4), (5) is connected at one side to the second clamping part (2) and is connected at the other side to the base part (3).

9. Carrier device according to any one of the preceding claims, **characterized in that** both clamping parts (1), (2) comprise:
a. a first substantially spherical concave clamping surface (11), (21) for surrounding part of a head (81) of a towing hook (8), and
b. a second substantially cylindrical concave clamping surface (12), (22) for surrounding part of a neck (82) of the towing hook (8) which adjoins the head (81),
so that the first (11), (21) and second clamping surfaces (12), (22) of the clamping parts (1), (2), with respect to a towing hook (8) located therebetween, fit against opposite sides of respectively the head (81) and the neck (82) of the towing hook (8) and thereby hold the carrier device on the towing hook (8) in a stable manner in both the clamping position and the non-clamping position.

10. Carrier device according to any one of the preceding claims, **characterized in that** the first clamping part (1) and at least a part (2a), (2b) of the second clamping part (2) are rotatable or displaceable in the non-clamping position,
- into a respective first position in which the head (81) of a towing hook (8) can be brought into the space via the passage, and
- into a respective second position in which both clamping parts fit against opposite sides of the head (81) and/or the neck (82) of the towing hook (8), and thereby hold the carrier device on the towing hook (8) in a stable manner.

11. Carrier device according to claim 10, **characterized in that** the second clamping part (2) is composed of two or more parts, **in that** it comprises a part (2b) with a clamping surface for fitting against the lower part of the ball (81) and/or the neck (82) of the towing hook (8), and **in that** said part (2b) of the second clamping part (2) is rotatable or displaceable with respect to the base part (3).

12. Carrier device according to claim 10 or 11, **characterized in that** the first clamping part (1) and at least a part of the second clamping part (2) are rotatable between a clamping position in which the clamping surface of said clamping parts (1), (2) surrounds a towing hook (8) and a downwardly rotated open position in which the clamping parts (1), (2) are remote from one another at the underside and leave a passage clear through which the spherical head (81) of a towing hook (8) can be brought into the space between the clamping parts (1), (2).

13. Carrier device according to claim 12, **characterized in that** for each rotatable clamping part (1), (2) a stop (33) is provided to prevent the further upward rotation of the clamping part when the clamping part is in the clamping position, and/or a retaining means (38), (39) is provided for preventing the further downward rotation of the clamping part when the clamping part is in the open position.

14. Carrier device according to claim 12 or 13, **characterized in that** the clamping mechanism (B) comprises a lock having an open and a closed position, and **in that**, in the closed position, the lock is provided to keep at least one rotatable clamping part in said clamping position.

15. Carrier device according to any one of the preceding claims, **characterized in that** the carrier structure (A) is designed to carry one or more bicycles.

## Patentansprüche

1. Lastenträger zur lösbaren Befestigung an einer Anhängerkupplung (8) eines Fahrzeugs, umfassend:
a. eine Trägerkonstruktion (A) zum Tragen einer zu transportierenden Last,
b. einen Klemmmechanismus (B), der mit der Trägerkonstruktion verbunden ist und ein Basisteil (3) umfasst, das mit einem ersten (1) und einem zweiten Klemmteil (2) verbunden ist, die im Verhältnis zu einer Anhängerkupplung (8), die sich im Raum zwischen den Klemmteilen (1), (2) befindet, in eine Klemmposition und in eine Nichtklemmposition gebracht werden können, und
c. Betätigungsmittel, um die Klemmteile (1), (2) aus der Nichtklemmposition in die Klemmposition zu bringen und umgekehrt,
**dadurch gekennzeichnet, dass** der Lastenträger Übertragungsmittel umfasst, um die Klemmteile (1), (2) durch Ausüben einer Kraft, die das erste Klemmteil (1) und das Basisteil (3) auseinanderschiebt, in die Klemmposition zu bringen, und dass das zweite Klemmteil (2) über ein Federelement (4), (5) mit dem Basisteil (3) verbunden ist, so dass das Basisteil (3), wenn die Klemmteile (1), (2) unter dem Einfluss der Kraft in die Klemmposition gebracht werden, gegen eine Federkraft im Verhältnis zum ersten (1) und zweiten Klemmteil (2) und zur dazwischen befindlichen Anhängerkupplung (8) verschiebbar ist.

2. Lastenträger nach Anspruch 1, **dadurch gekennzeichnet, dass** die Übertragungsmittel ein Schiebeelement (7) umfassen, das gemäß einer klar definierten Bewegungskurve durch Drehung eines Betätigungsarms (61, 62) verschoben wird, und das sich während dieses Verschiebens über eine am ersten Klemmteil (1) vorgesehene Lauffläche (15) bewegt, so dass das Schiebeelement (7) während der Drehung des Betätigungsarms (61, 62) in einer Drehrichtung eine zunehmende Kraft auf das erste Klemmteil (1) und während der Drehung des Betätigungsarms (61, 62) in der anderen Drehrichtung eine abnehmende Kraft auf das erste Klemmteil (1) ausübt.

3. Lastenträger nach Anspruch 2, **dadurch gekennzeichnet, dass** die Trägerkonstruktion (A) zwischen einer operativen Position und einer nichtoperativen Position kippbar und mit dem Betätigungsarm (61, 62) verbunden ist, so dass die Klemmteile (1), (2) durch Kippen der Trägerkonstruktion (A) aus der Klemmposition in die Nichtklemmposition gebracht werden und umgekehrt, und dass das Basisteil (3) eine Abstützfläche (9) umfasst, um den Betätigungsarm (61, 62) abzustützen, wenn die Trägerkonstruktion in der operativen Position ist.

4. Lastenträger nach Anspruch 2 oder 3, **dadurch gekennzeichnet, dass** die Lauffläche (15) durch eine Oberfläche des ersten Klemmteils (1) gebildet ist, dass der Betätigungsarm (61), (62) mit dem Basisteil (3) des Klemmmechanismus (B) drehbar verbunden ist, und dass das Schiebeelement (7) am Betätigungsarm (61), (62) befestigt ist, so dass das Schiebeelement (7) gemäß einer im Wesentlichen kreisbogenförmigen Bewegungskurve während der Drehung des Betätigungsarms verschoben wird.

5. Lastenträger nach einem der Ansprüche 2 bis 4, **dadurch gekennzeichnet, dass** der Betätigungsarm (61, 62) mittels einer feststehenden Achse (14) mit dem Basisteil (3) drehbar verbunden ist, und dass sich die feststehende Achse (14) durch einen Ausschnitt (13) im ersten Klemmteil (1) erstreckt, wodurch ein Verschieben des ersten Klemmteils (1) im Verhältnis zur feststehenden Achse (14) ermöglicht wird, so dass das erste Klemmteil (1) um die feststehende Achse (14) drehbar und im Verhältnis zum Basisteil (3) auch verschiebbar ist.

6. Lastenträger nach einem der vorstehend aufgeführten Ansprüche, **dadurch gekennzeichnet, dass** der Klemmmechanismus (B) eine Achse (24) umfasst, die im Verhältnis zum Basisteil (3) verschiebbar ist, und dass das zweite Klemmteil (2) mittels der verschiebbaren Achse (24) am Basisteil (3) drehbar befestigt ist, so dass das zweite Klemmteil (2) drehbar und im Verhältnis zum Basisteil (3) auch verschiebbar ist.

7. Lastenträger nach Anspruch 6, **dadurch gekennzeichnet, dass** das Federelement (4), (5) an einer Seite mit der verschiebbaren Achse (24) des zweiten Klemmelements (2) und an der anderen Seite mit dem Basisteil (3) des Klemmmechanismus (B) verbunden ist.

8. Lastenträger nach einem der vorstehend aufgeführten Ansprüche, **dadurch gekennzeichnet, dass** das Basisteil (3) zwei Flankenbleche (31), (32) umfasst, die sich nebeneinander mit einem Abstand erstrecken, dass die Klemmteile (1), (2) an jeweiligen Achsen (14), (24) befestigt sind, die sich zwischen den Flankenblechen (31), (32) erstrecken, dass der Klemmmechanismus (B) zwei Federelemente (4), (5) umfasst, die sich entlang der Außenseite eines jeweiligen Flankenblechs (31), (32) erstrecken, und dass jedes Federelement (4), (5) an einer Seite mit dem zweiten Klemmteil (2) und an der anderen Seite mit dem Basisteil (3) verbunden ist.

9. Lastenträger nach einem der vorstehend aufgeführten Ansprüche, **dadurch gekennzeichnet, dass** beide Klemmteile (1), (2) umfassen:
a. eine erste, im Wesentlichen sphärische konkave Klemmfläche (11), (21), um einen Teil eines Kopfes (81) einer Anhängerkupplung (8) zu umgeben, und
b. eine zweite, im Wesentlichen zylindrische konkave Klemmfläche (12), (22), um einen Teil eines Halses (82) der Anhängerkupplung (8) zu umgeben, der sich an den Kopf (81) anschließt,
so dass die ersten (11), (21) und zweiten Klemmflächen (12), (22) der Klemmteile (1), (2), im Verhältnis zu einer dazwischen befindlichen Anhängerkupplung (8), an gegenüberliegende Seiten des Kopfes (81) bzw. des Halses (82) der Anhängerkupplung (8) angepasst sind und dadurch den Lastenträger sowohl in der Klemmposition als auch in der Nichtklemmposition in einer stabilen Weise an der Anhängerkupplung (8) festhalten.

10. Lastenträger nach einem der vorstehend aufgeführten Ansprüche, **dadurch gekennzeichnet, dass** das erste Klemmteil (1) und mindestens ein Teil (2a), (2b) des zweiten Klemmteils (2) in der Nichtklemmposition drehbar oder verschiebbar sind
- in eine jeweilige erste Position, in der der Kopf (81) einer Anhängerkupplung (8) über den Durchgang in den Raum gebracht werden kann, und
- in eine jeweilige zweite Position, in der beide Klemmteile an gegenüberliegende Seiten des Kopfes (81) und/oder des Halses (82) der Anhängerkupplung (8) angepasst sind und dadurch den Lastenträger in einer stabilen Weise an der Anhängerkupplung (8) festhalten.

11. Lastenträger nach Anspruch 10, **dadurch gekennzeichnet, dass** das zweite Klemmteil (2) aus zwei oder mehr Teilen besteht, dass es ein Teil (2b) mit einer Klemmfläche umfasst, um sich an den unteren Teil der Kugel (81) und/oder den Hals (82) der Anhängerkupplung (8) anzupassen, und dass das Teil (2b) des zweiten Klemmteils (2) im Verhältnis zum Basisteil (3) drehbar oder verschiebbar ist.

12. Lastenträger nach Anspruch 10 oder 11, **dadurch gekennzeichnet, dass** das erste Klemmteil (1) und mindestens ein Teil des zweiten Klemmteils (2) zwischen einer Klemmposition, in der die Klemmfläche der Klemmteile (1), (2) eine Anhängerkupplung (8) umgibt, und einer nach unten gedrehten offenen Position, in der die Klemmteile (1), (2) an der Unterseite voneinander entfernt sind und einen Durchgang freilassen, durch den der kugelförmige Kopf (81) einer Anhängerkupplung (8) in den Raum zwischen den Klemmteilen (1), (2) gebracht werden kann, drehbar sind.

13. Lastenträger nach Anspruch 12, **dadurch gekennzeichnet, dass** für jedes drehbare Klemmteil (1), (2) ein Anschlag (33) vorgesehen ist, um die weitere Aufwärtsdrehung des Klemmteils zu unterbinden, wenn das Klemmteil in der Klemmposition ist, und/oder dass ein Rückhaltemittel (38), (39) vorgesehen ist, um die weitere Abwärtsdrehung des Klemmteils zu unterbinden, wenn das Klemmteil in der offenen Position ist.

14. Lastenträger nach Anspruch 12 oder 13, **dadurch gekennzeichnet, dass** der Klemmmechanismus (B) eine Verriegelung mit einer offenen und einer geschlossenen Position umfasst, und dass die Verriegelung, in der geschlossenen Position, vorgesehen ist, um mindestens ein drehbares Klemmteil in der Klemmposition zu halten.

15. Lastenträger nach einem der vorstehend aufgeführten Ansprüche, **dadurch gekennzeichnet, dass** die Trägerkonstruktion (A) dafür ausgelegt ist, ein oder mehrere Fahrräder zu tragen.

## Revendications

1. Dispositif porteur destiné à être attaché de manière amovible à un crochet d'attelage (8) d'un véhicule, comprenant
a. une structure porteuse (A) pour porter une charge à transporter,
b. un mécanisme de serrage (B) connecté à la structure porteuse, comprenant une partie de base (3) connectée à une première partie de serrage (1) et à une deuxième partie de serrage (2) qui peuvent être amenées dans une position de serrage et dans une position non serrée par rapport à un crochet d'attelage (8) situé dans l'espace entre les parties de serrage (1), (2), et
c. un moyen d'actionnement pour amener les parties de serrage (1), (2) de la position non serrée dans la position de serrage, et vice versa,
**caractérisé en ce que** ledit dispositif porteur comprend des moyens de transmission pour amener les parties de serrage (1), (2) dans la position de serrage en exerçant une force qui pousse la première partie de serrage (1) et la partie de base (3) à l'écart l'une de l'autre, **en ce que** la deuxième partie de serrage (2) est connectée par le biais d'un élément de ressort (4), (5) à la partie de base (3) de telle sorte qu'à mesure que les parties de serrage (1), (2) sont amenées dans la position de serrage sous l'influence de ladite force, la partie de base (3) puisse être déplacée à l'encontre d'une force de ressort par rapport à la première (1) et à la deuxième (2) partie de serrage et au crochet d'attelage (8) situé entre elles.

2. Dispositif porteur selon la revendication 1, **caractérisé en ce que** lesdits moyens de transmission comprennent un élément pousseur (7) qui est déplacé en fonction d'une trajectoire de déplacement bien définie par la rotation d'un bras d'actionnement (61, 62) et qui se déplace au cours de ce déplacement sur une surface de roulement (15) prévue sur la première partie de serrage (1), de telle sorte que l'élément pousseur (7) exerce une force croissante sur la première partie de serrage (1) au cours de la rotation du bras d'actionnement (61, 62) dans un sens de rotation et exerce une force décroissante sur la première partie de serrage (1) au cours de la rotation du bras d'actionnement (61, 62) dans l'autre sens de rotation.

3. Dispositif porteur selon la revendication 2, **caractérisé en ce que** la structure porteuse (A) peut être basculée entre une position fonctionnelle et une position non fonctionnelle et est connectée audit bras d'actionnement (61, 62) de telle sorte que les parties de serrage (1), (2) soient amenées de la position de serrage dans la position non serrée et vice versa en faisant basculer la structure porteuse (A), et **en ce que** la partie de base (3) comprend une surface de support (9) pour supporter ledit bras d'actionnement (61, 62) lorsque la structure porteuse est dans la position fonctionnelle.

4. Dispositif porteur selon la revendication 2 ou 3, **caractérisé en ce que** ladite surface de roulement (15) est formée par une surface de la première partie de serrage (1), **en ce que** le bras d'actionnement (61), (62) est connecté de manière rotative à la partie de base (3) du mécanisme de serrage (B), et **en ce que** l'élément pousseur (7) est attaché au bras d'actionnement (61), (62), de telle sorte que l'élément pousseur (7) soit déplacé en fonction d'une trajectoire de déplacement substantiellement en forme d'arc de cercle au cours de la rotation du bras d'actionnement.

5. Dispositif porteur selon l'une quelconque des revendications 2 à 4, **caractérisé en ce que** le bras d'actionnement (61, 62) est connecté de manière rotative à la partie de base (3) au moyen d'un essieu fixe (14), **en ce que** ledit essieu fixe (14) s'étend à travers une découpure (13) dans la première partie de serrage (1), qui permet un déplacement de la première partie de serrage (1) par rapport à l'essieu fixe (14), de telle sorte que la première partie de serrage (1) puisse tourner autour de l'essieu fixe (14) et puisse également être déplacée par rapport à la partie de base (3).

6. Dispositif porteur selon l'une quelconque des revendications précédentes, **caractérisé en ce que** le mécanisme de serrage (B) comprend un essieu (24) qui peut être déplacé par rapport à la partie de base (3), et **en ce que** la deuxième partie de serrage (2) est attachée de manière rotative à la partie de base (3) au moyen dudit essieu déplaçable (24), de telle sorte que la deuxième partie de serrage (2) puisse tourner et soit également déplaçable par rapport à la partie de base (3).

7. Dispositif porteur selon la revendication 6, **caractérisé en ce que** l'élément de ressort (4), (5) est connecté au niveau d'un côté à l'essieu déplaçable (24) du deuxième élément de serrage (2) et est connecté au niveau de l'autre côté à la partie de base (3) du mécanisme de serrage (B).

8. Dispositif porteur selon l'une quelconque des revendications précédentes, **caractérisé en ce que** la partie de base (3) comprend deux plaques de flanc (31), (32) qui s'étendent l'une à côté de l'autre à une certaine distance, **en ce que** les parties de serrage (1), (2) sont attachées à des essieux respectifs (14), (24) qui s'étendent entre les plaques de flanc (31), (32), **en ce que** le mécanisme de serrage (B) comprend deux éléments de ressort (4), (5) qui s'étendent le long de l'extérieur d'une plaque de flanc respective (31), (32), et **en ce que** chaque élément de ressort (4), (5) est connecté au niveau d'un côté à la deuxième partie de serrage (2) et est connecté au niveau de l'autre côté à la partie de base (3).

9. Dispositif porteur selon l'une quelconque des revendications précédentes, **caractérisé en ce que** les deux parties de serrage (1), (2) comprennent :
a. une première surface de serrage concave sensiblement sphérique (11), (21) pour entourer une partie d'une tête (81) d'un crochet d'attelage (8), et
b. une deuxième surface de serrage concave substantiellement cylindrique (12), (22) pour entourer une partie d'un col (82) du crochet d'attelage (8) qui est adjacent à la tête (81),
de telle sorte que les premières (11), (21) et deuxièmes (12), (22) surfaces de serrage des parties de serrage (1), (2), par rapport à un crochet d'attelage (8) situé entre elles, s'ajustent contre des côtés opposés respectivement de la tête (81) et du col (82) du crochet d'attelage (8) et retiennent ainsi le dispositif porteur sur le crochet d'attelage (8) de manière stable à la fois dans la position de serrage et dans la position non serrée.

10. Dispositif porteur selon l'une quelconque des revendications précédentes, **caractérisé en ce que** la première partie de serrage (1) et au moins une partie (2a), (2b) de la deuxième partie de serrage (2) peuvent tourner ou être déplacées dans la position non serrée,
- dans une première position respective dans laquelle la tête (81) d'un crochet d'attelage (8) peut être amenée dans l'espace par le biais du passage, et
- dans une deuxième position respective dans laquelle les deux parties de serrage s'ajustent contre des côtés opposés de la tête (81) et/ou du col (82) du crochet d'attelage (8), et retiennent ainsi le dispositif porteur sur le crochet d'attelage (8) de manière stable.

11. Dispositif porteur selon la revendication 10, **caractérisé en ce que** la deuxième partie de serrage (2) est constituée de deux ou plus de deux parties, **en ce qu'**elle comprend une partie (2b) avec une surface de serrage destinée à s'ajuster contre la partie inférieure de la boule (81) et/ou du col (82) du crochet d'attelage (8), et **en ce que** ladite partie (2b) de la deuxième partie de serrage (2) peut tourner ou être déplacée par rapport à la partie de base (3).

12. Dispositif porteur selon la revendication 10 ou 11, **caractérisé en ce que** la première partie de serrage (1) et moins une partie de la deuxième partie de serrage (2) peuvent tourner entre une position de serrage dans lequel la surface de serrage desdites parties de serrage (1), (2) entoure un crochet d'attelage (8) et une position ouverte tournée vers le bas dans laquelle les parties de serrage (1), (2) sont éloignées l'une de l'autre au niveau inférieur et laissent dégagé un passage à travers lequel la tête sphérique (81) d'un crochet d'attelage (8) peut être amenée dans l'espace entre les parties de serrage (1), (2).

13. Dispositif porteur selon la revendication 12, **caractérisé en ce que** pour chaque partie de serrage rotative (1), (2), une butée (33) est prévue pour empêcher la rotation supplémentaire vers le haut de la partie de serrage lorsque la partie de serrage est dans la position de serrage, et/ou un moyen de retenue (38), (39) est prévu pour empêcher la rotation supplémentaire vers le bas de la partie de serrage lorsque la partie de serrage est dans la position ouverte.

14. Dispositif porteur selon la revendication 12 ou 13, **caractérisé en ce que** le mécanisme de serrage (B) comprend un verrou ayant une position ouverte et une position fermée, et **en ce que**, dans la position fermée, le verrou est prévu pour maintenir au moins une partie de serrage rotative dans ladite position de serrage.

15. Dispositif porteur selon l'une quelconque des revendications précédentes, **caractérisé en ce que** la structure porteuse (A) est conçue pour porter une ou plusieurs bicyclettes.
